# EUROPÄISCHE PATENTSCHRIFT

(11) **EP 1 694 540 B1**
(45) Veröffentlichungstag und Bekanntmachung des Hinweises auf die Patenterteilung: **12.03.2008**
(21) Anmeldenummer: 04803954.9
(22) Anmeldetag: 16.12.2004
(51) Int. Cl.: B60S 1/24, B60S 1/16

(54) **WISCHANLAGE**
WIPING SYSTEM
SYSTEME D'ESSUIE-GLACE

(30) Priorität: 18.12.2003 DE 10359968
(43) Veröffentlichungstag der Anmeldung: 30.08.2006
(73) Patentinhaber: VALEO SYSTEMES D'ESSUYAGE, 78321 La Verrière (FR)
(72) Erfinder: EGNER-WALTER, Bruno, 74076 Heilbronn (DE); SCHÄUBLE, Michael, 71665 Vaihingen/Enz (DE)
(74) Vertreter: Rosolen-Delarue, Katell
(86) Internationale Anmeldenummer: PCT/EP2004/014341
(87) Internationale Veröffentlichungsnummer: WO 2005/058660

(56) Entgegenhaltungen:
- WO-A-00/56582
- DE-A1- 4 333 484
- DE-A1- 10 125 988

## Beschreibung

Die Erfindung betrifft eine Wischanlage zum Wischen von Scheiben an einem Fahrzeug gemäß Oberbegriff von Anspruch 1.

Eine Scheibenwischeranlage wird bekanntermaßen von einem entsprechend ausgebildeten Elektromotor angetrieben, der üblicherweise ein Untersetzungsgetriebe mit einer Abtriebswelle aufweist. Die von einem solchen Motor bzw. dessen Abtriebswelle ausgehende Drehbewegung wird über geeignete Übertragungsmittel zu dem mindestens einen Wischblatt übertragen, so dass dieses die gewünschte Wischbewegung durchführt.

Ein derartiger Motor mit einer entsprechenden Kraftübertragungseinrichtung wird in der deutschen Offenlegungsschrift DE 36 32 694 A1 vorgestellt. Die hier als Kurbel ausgebildete Kraftübertragungseinrichtung ist weitgehend stabförmig und weist etwa in der Mitte eine Stufe auf. Dabei ist ein Ende der Kurbel direkt an einer Abtriebswelle des Wischermotors befestigt. An einem anderen Ende der Kurbel ist ein Übertragungselement vorgesehen, an dem weitere Kraftübertragungseinrichtungen befestigt sein können. Das Übertragungselement kann um die Abtriebswelle herum eine kreisförmige Bewegung ausführen. Aufgrund der stufenförmigen Ausbildung der Kurbel wird eine von der Antriebsachse des Wischermotors ausgehende Drehbewegung in eine Ebene oberhalb der Befestigungsmutter, mit welcher die Kurbel an der Abtriebswelle festgesetzt ist, übertragen.

Die Druckschrift DE 43 33 484 A1 beschreibt einen vergleichbaren Wischermotor mit einer weitgehend identisch ausgebildeten Kurbel. An einem Lager dieser Kurbel ist ein gelenkiges Gestänge angeordnet, über das eine von dem Wischermotor ausgehende Bewegung an weitere Einrichtungen eines Wischsystems, wie ein Wischblatt, übertragen werden kann.

Die in der Druckschrift DE 199 47 620 A1 vorgestellte Kurbel, die an einer Antriebsachse eines Wischermotors befestigt ist, unterscheidet sich von den Kurbeln der vorstehend angeführten Druckschriften dadurch, dass sie nicht stufenförmig sondern eben ausgebildet ist und somit eine geringere Bauhöhe in Richtung einer Mittelachse der Antriebsachse des Wischermotors aufweist.

In der Druckschrift WO 00/56582 A1 wird ein Wischerantrieb mit einem reversierbaren Getriebemotor mit einer Abtriebswelle offenbart, auf deren aus dem Getriebegehäuse herausragenden freien Ende eine Motorkurbel mit einem Kugelzapfen befestigt ist. Auf dem Kugelzapfen ist eine Antriebsstange gelagert, welche als Getriebeteil zum Antrieb eines Scheibenwischers vorgesehen ist. Der Getriebemotor ist mit einer Schraube an der Motorplatine angeschraubt und ragt in den Abstand zwischen Motorplatine und Motorkurbel hinein. Um trotz dieser Schraube eine die Bauhöhe des Antriebs in axialer Ausdehnung der Abtriebswelle gering zu halten wird die Motorkurbel in Richtung von der Motorplatine hinweg gekröpft, wodurch beim Betrieb der Anlage ein Anschlagen der Kurbel gegen die Befestigungsschraube vermieden wird. Die Bauhöhe wird nunmehr dadurch gering gehalten, dass der an der Motorkurbel vorgesehene Kugelbolzen in die der Kröpfung entgegen gesetzte Richtung, d. h. in Richtung zur Motorplatine hin, von der Motorkurbel absteht. Mehr zufällig ergibt sich durch diese Anordnung der Umstand, dass der theoretische Kraftübertragungspunkt zwischen den kooperierenden Getriebeteilen, Motorkurbel und Antriebsstange, der im Mittelpunkt der Kugel des Kugelbolzens zu sehen ist, ausgehend von dem freien Ende der Abtriebswelle um einen geringen Betrag in Richtung zu Motorplatine bzw. zu dem Getriebegehäuse hin versetzt angeordnet ist. Das heißt anders ausgedrückt, dass dieser theoretische Kraftübertragungspunkt in dem Abstand zwischen dem freien Ende der Abtriebswelle und dem am weitesten von diesem freien Ende entfernt liegenden Ende der Lagerstellen bzw. Lagerstellen der Abtriebswelle positioniert ist.

Vor diesem Hintergrund wird eine Wischanlage mit den Merkmalen des Patentanspruchs 1 vorgestellt.

Die erfindungsgemäße Wischanlage weist einen als Getriebemotor ausgebildeten elektrischen Motor mit einer Abtriebswelle, die ein freies Ende und ein getriebeinneres Ende hat, sowie eine Motorkurbel auf. Zu der Motorkurbel gehören ein erstes Ende sowie ein zweites Ende, das mit einem Übertragungselement ausgestattet ist. Hierbei ist das erste Ende der Motorkurbel an dem freien Ende der Abtriebswelle drehfest befestigt. Dabei ist die Motorkurbel derart ausgebildet, dass der theoretische Kraftübertragungspunkt des Übertragungselementes an dem zweiten Ende der Motorkurbel in Richtung einer Mittelachse der Abtriebswelle in dem Abstand zwischen dem freien Ende der Abtriebswelle und dem getriebeinneren Ende der Abtriebswelle sowie in dem Abstand zwischen dem freien Ende der Abtriebswelle und dem am weitesten entfernt von dem freien Ende der Abtriebswelle befindlichen Ende der einen zylindrischen Lagerstelle bzw. der zwei Lagerstellen und außerdem in dem Abstand zwischen den beiden Enden der einen zylindrischen Lagerstelle bzw. zwischen den am weitesten voneinander entfernt befindlichen Enden der beiden Lagerstellen der Abtriebswelle positioniert ist. Durch diese Ausgestaltung weist das gesamte Motorsystem mit der Motorkurbel eine geringe Bauhöhe auf. Mit der Erfindung werden außerdem die beim Betrieb der Anlage auf die Abtriebswelle rückwirkenden Kräfte minimiert, welche insbesondere in den Lagerstellen der Abtriebswelle abgestützt bzw. kompensiert werden müssen. Der Eintrag schädlicher Kippmomente in die Abtriebswelle wird reduziert, und die Belastung des Motors wird verringert. Dadurch wird der Verschleiß, insbesondere des getriebeseitigen Teiles, des Motors verringert und dessen Lebensdauer erhöht.

Das an der Motorkurbel vorgesehene Übetragungselement kann im Sinne der erfindungsgemäßen Lösung ein einfacher zylindrischer Gelenkbolzen oder ein Kugelbolzen oder ein Doppelkugelbolzen sein oder auch eine einfache zylindrische Lagerschale oder ein kugelige Lagerschale oder eine doppelkugelige Lagerschale oder dergleichen sein.

Die Erfindung beruht auf dem Grundgedanken, dass die auf die Abtriebswelle beim Betrieb der Scheibenwischeranlage rückwirkenden Kräfte in um so stärkerem Maße verringert werden, je näher sich die theoretischen Kraftwirkungslinien und Kraftübertragungspunkte des Systems in Richtung der Mittelachse der Abtriebswelle betrachtet an dem Lagerungsmittelpunkt der Abtriebswelle befindet.

Aus den Unteransprüchen ergeben sich vorteilhafte Weiterbildungen der Erfindung.

Die unterschiedlichen Ausgestaltungen der Unteransprüche 2 - 14 führen entweder für sich allein oder in Kombination zu weiterreichenden Verbesserungen bzw. Erhöhungen des zuvor angeführten Effektes bzw. Vorteiles.

In besonders bevorzugter Ausgestaltung der erfindungsgemäßen Wischanlage gemäß Anspruch 2 ist dabei vorgesehen, dass der theoretische Kraftübertragungspunkt des Übertragungselement in Richtung der Mittelachse der Abtriebswelle im wesentlichen auf Höhe des Mittelpunktes der einen zylindrischen Lagerstelle bzw. des Mittelpunktes zwischen den zwei voneinander beabstandeten Lagerstellen der Abtriebswelle positioniert ist. Ideal wäre natürlich eine Positionierung genau auf dieser Höhe. Das bedeutet, dass eine eventuelle auf die Abtriebswelle rückwirkende Krafteinleitung innerhalb derjenigen gedachten Ebene erfolgt, die rechtwinklig zu der Abtriebswelle durch deren Lagerungsmittelpunkt verläuft. Diese Ebene ist aber in diesem Fall als kräfteneutral anzusehen.

Gemäß Anspruch 11 ist vorteilhafterweise vorgesehen, dass die beiden Enden der Motorkurbel in Richtung der Abtriebswelle versetzt angeordnet sind. Hierzu kann die Motorkurbel abgekröpft, abgebogen oder gestuft ausgebildet sein. Betrachtet man das freie Ende der Abtriebswelle, an dem das erste Ende der Motorkurbel angeordnet bzw. befestigt ist, als einen höchsten Punkt der Abtriebswelle, so ist das zweite Ende der Motorkurbel mit dem Übertragungselement unterhalb des freien Endes der Abtriebswelle angeordnet. Bei einer Montage der Wischanlage ist die Motorkurbel gemäß der Erfindung so an der Abtriebswelle anzuordnen, dass eine Stufung, Biegung oder Kröpfung der Motorkurbel, ausgehend von einem Niveau des freien Endes der Abtriebswelle, hin zu einem getriebeinneren Ende der Abtriebswelle ausgerichtet bzw. orientiert ist.

Bei Realisierung einer Weiterbildung gemäß Anspruch 12, wird erreicht dass die Motorkurbel kreisförmig umlaufend betrieben werden kann. Dieses entspricht dem Betrieb einer herkömmlichen Wischeranlage, bei der die umlaufende Drehbewegung der Motorkurbel über das nachgeschaltete Getriebe in eine pendelnde Drehbewegung der Wischerwelle umgewandelt wird. In diesem Fall ist es allerdings nicht möglich, den an der Motorkurbel vorgesehenen theoretischen Kraftübertragungspunkt in unmittelbare Nähe zu der gedachten Ebene zu bringen, die rechtwinklig zu der Abtriebswelle durch deren Lagerungsmittelpunkt verläuft.

Bei einer Wischanlage mit rundumlaufendem Antrieb muss das zweite Ende der Motorkurbel zur Durchführung einer kreisförmigen Bewegung um die Abtriebswelle von 360° und mehr ausgelegt sein. Dies kann beispielsweise dadurch erreicht werden, dass die Motorkurbel unter Berücksichtigung der versetzten Anordnung der beiden Enden eine ausreichende Länge aufweist. Ebenfalls kann die Stufung oder Biegung entlang der Motorkurbel in einem mittleren Bereich oder in einem Endbereich der Motorkurbel angeordnet sein.

Eine Anordnung des theoretischen Kraftübertragungspunkt des Übertragungselementes an der Motorkurbel in unmittelbarer Nähe zu der bzw. direkt in der gedachten Ebene, die rechtwinklig zu der Abtriebswelle durch deren Lagerungsmittelpunkt verläuft, ist möglich bei Anwendung einer Weiterbildung gemäß Anspruch 13. Hierbei taucht die Motorkurbel in einen an der Wischanlage vorhandenen Freiraum ein, so dass das zweite Ende der Motorkurbel mit dem übertragungselement bzw. mit dem theoretischen Kraftübertragungspunkt des Übertragungselementes eine pendelnde Bewegung zwischen zwei Umkehrpositionen auf einer Teilkreisbahn ausführen kann. Eine solche Weiterbildung der Erfindung kann vorteilhaft angewendet werden, wenn die Wischeranlage von einem reversierend arbeitenden Wischermotor, d. h. seine Bewegungsrichtung in vorbestimmten Umkehrpositionen umkehrenden Motor; angetrieben wird. Dabei kann eine reversierend angetriebene Wischanlage sehr kompakt aufgebaut und mit nur einem Wischlager oder auch mit zwei Wischlagern ausgerüstet sein.

Bei reversierenden Scheibenwischerantrieben wird zur Vermeidung von Funktionsfehlern häufig verlangt, den Winkelbereich, in welchem sich die Abtriebswelle pendelnd bewegt, durch mechanische Anschläge zu begrenzen. Hierzu bietet sich eine Ausgestaltung gemäß Anspruch 14 an, welche vorsieht, dass bei in einen Freiraum der Wischanlage eintauchender Motorkurbel den Umkehrpositionen der Motorkurbel benachbarte Teile bzw. Abschnitte der Wischanlage als Anschläge für die Begrenzung der Pendelbewegung der Motorkurbel ausgebildet bzw. mit Anschlagmitteln versehen sind.

Um die freie Beweglichkeit der mit der wenigstens einen Wischlagerschwinge verbundenen Getriebestange, insbesondere bei weit zueinander versetzt angeordneten Enden der Motorkurbel Und/oder der Wischlagerschwinge zu gewährleisten, kann es erforderlich sein, auch die Gelenkstange entsprechend abzukröpfen. Das kann je nach Gestaltung der Wischanlage nur an einem oder auch an beiden Enden der Getriebestange erforderlich sein. Für die Kraftübertragung ist in diesem Fall die Wirkungslinie der Getriebestange maßgeblich.

Weitere Vorteile und Ausgestaltungen der Erfindung ergeben sich aus der nachfolgenden Beschreibung.

Die Erfindung ist anhand von Ausführungsbeispielen in der Zeichnung schematisch dargestellt und wird im folgenden unter Bezugnahme auf die Zeichnung beschrieben. In der Zeichnung zeigen:
- Figur 1: ein bevorzugtes Ausführungsbeispiel einer erfindungsgemäßen Wischanlage in perspektivischer Darstellung;
- Figur 2: ein anderes Ausführungsbeispiel einer erfindungsgemäßen Wischvorrichtung in Seitenansicht;
- Figur 3: einen Teil der Wischanlage gemäß Figur 2 in Draufsicht;
- Figur 4: eine alternative Ausführung zu Figur 3 und
- Figur 5: verschiedene Details sowie die Definition verschiedener erfindungswesentlicher Abstände.

Die Figuren werden zusammenhängend und übergreifend beschrieben. Gleiche Bezugszeichen bedeuten gleiche Bauteile.

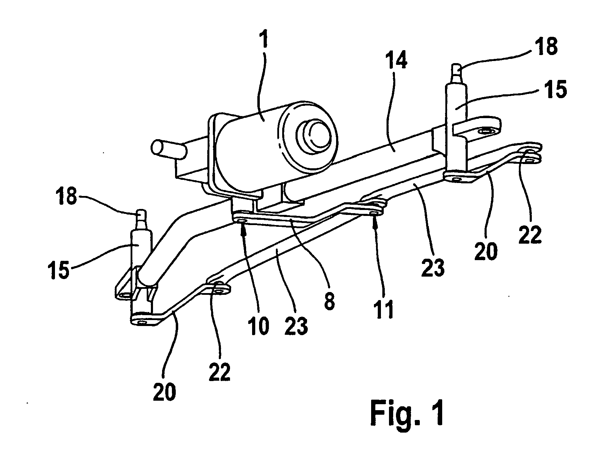

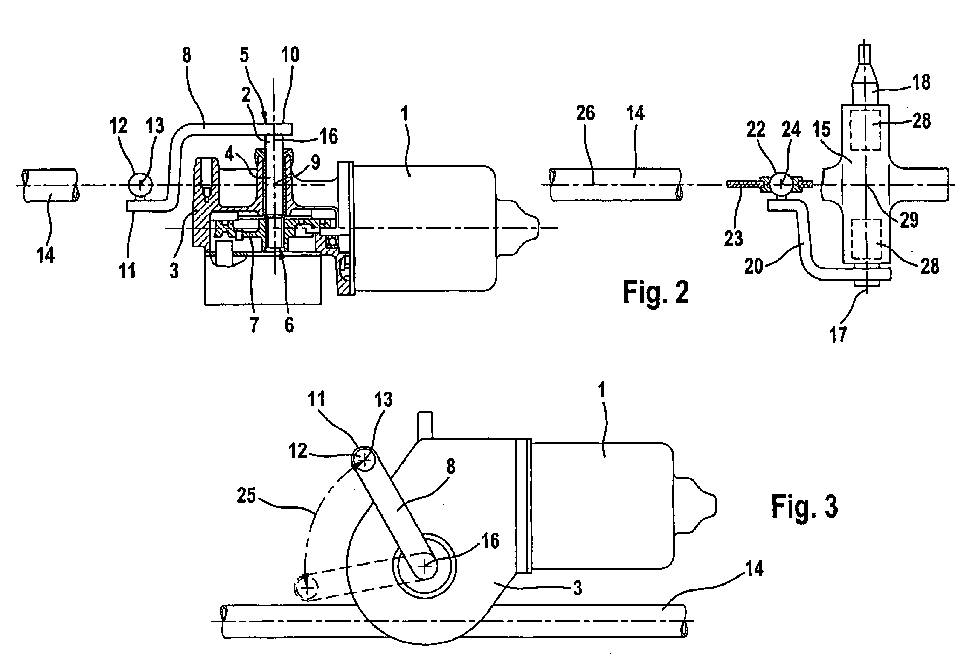

Die in Figur 1 oder in Figur 2 dargestellte Wischanlage weist als Antrieb einen elektrischen Motor 1 auf der gleichzeitig ein mit ihm verbundenes Untersetzungsgetriebe umfasst. Zu dem Untersetzungsgetriebe gehört die Abtriebswelle 2, die drehbar in einer in dem Gehäuse 3 angeordneten zylindrischen Lagerstelle 4 gelagert ist und mit einem freien Ende 5 aus einem Gehäusedurchbruch herausragt, während sich ihr getriebeinneres Ende 6 innerhalb des Gehäuses 3 befindet (siehe hierzu auch Figur 2). Auf der Abtriebswelle 2 sitzt innerhalb des Gehäuses 3 ein Getrieberad 7, in welches eine auf der velängerten Ankerwelle des Motors sitzende Schnecke eingreift.

Auf dem freien Ende 5 der Abtriebswelle 2 ist das erste Ende 10 einer Motorkurbel 8 drehfest befestigt, während am gegenüberliegenden zweiten Ende 11 der Motorkurbel 8 ein Übertragungselement 12 in Form eines Kugelbolzens bzw. Doppelkugelbolzens angebracht ist. Der Motor 1 ist an einer Trageinrichtung 14 befestigt, welche hier von einem durchgehenden oder zweigeteilten Tragrohr gebildet ist, an dessen gegenüberliegenden Enden jeweils ein Wischlager 15 derartig befestigt ist, dass die Mittelachse 16 der Abtriebswelle 2 und die Mittelachsen 17 der Wischerwellen 18 zumindest angenähert parallel verlaufen. Das Tragrohr kann dabei insgesamt geradlinig ausgebildet sein oder, wie in Figur 1 wenigstens auf einer Seite von der Motorbefestigung eine Biegung oder Krümmung aufweisen. An dem jeweils aus dem Wischlager 15 herausragenden Ende der Wischerwelle 18 ist eine Schwinge 20 befestigt, deren freies Ende ebenfalls ein Übertragungselement 22 aufweist. Zwischen den Übertragungselementen 22 der Schwingen 18 und dem Übertragungselement 12 der Motorkurbel 8 ist jeweils eine Getriebestange 23 angeordnet, die an ihren gegenüberliegenden Enden jeweils mit dem Übertragungselement 8 und einem der Übertragungselemente 22 drehbar verbunden ist.

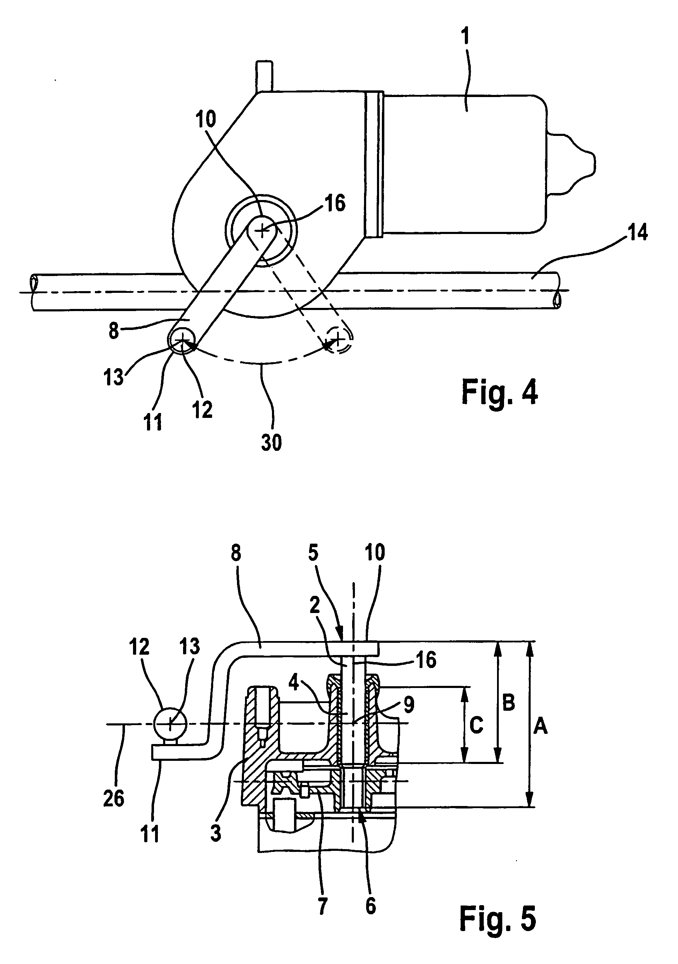

In Figur 1 sind die Motorkurbel 8 sowie die Schwingen 20 so ausgebildet, dass ihre jeweils gegenüberliegenden Enden, in Richtung der Mittelachse 16 der Abtriebswelle 2 betrachtet, versetzt angeordnet sind. Dadurch sind gemäß der Erfindung der theoretische Kraftübertragungspunkt 13 des Übertragungselementes 12 an der Motorkurbel 8 als auch die theoretischen Kraftübertragungspunkte 24 der Übertragungselemente 22 an den Schwingen 20 der Wischerwellen 18 in Richtung der Mittelachse 12 in dem Abstand A (siehe auch Figur 5) zwischen dem freien Ende 5 und dem getriebeinneren Ende 6 der Abtriebswelle 2 positioniert. Es ist zu erkennen, dass die beiden Enden 10 und 11 der Motorkurbel 8 in Richtung der Mittelachse 16 der Abtriebswelle 2 versetzt angeordnet sind. Das bedeutet, die Motorkurbel 8 ist in Richtung der Mittelachse 16 der Abtriebswelle 2 derart abgekröpft, dass das freie Ende 11 der Motorkurbel 8 die Trageinrichtung 14 übergreift und dort in einen Freiraum der Wischanlage eintaucht. Da in diesem Fall die Motorkurbel nicht vollständig umlaufen kann, arbeitet der Motor 1 reversierend. Die Motorkurbel 8 führt eine pendelnde Drehbewegung zwischen zwei Umkehrpositionen aus.

Alternativ hierzu kann die Wischanlage auch derart ausgebildet sein, dass die Motorkurbel 8 relativ zu der Mittelachse der Abtriebswelle 2 eine umlaufende kreisförmige Bewegung von 360° und mehr durchführen kann. In diesem Fall muss dafür gesorgt werden, dass im gesamten Umlaufbereich zwischen der Motorkurbel 8 und den benachbarten Teilen bzw. Abschnitten der Wischanlage ein Abstand besteht.

In den Figuren 2 und 3 ist schematisch eine erfindungsgemäße Wischanlage dargestellt, das links von dem Motor 1 vorgesehene Wischlager 15 hier aus Gründen der Vereinfachung der Darstellung nicht dargestellt ist. Es ist aber davon auszugehen, dass das nicht dargestellte Wischlager im prinzipiellen Aufbau dem auf der rechten Seite vom Motor 1 dargestellten Wischlager 15 entspricht. Es wird vorausgeschickt, dass in Figur 2 ein mit der Lehre der Erfindung anzustrebender Aufbau einer Wischanlage angedeutet ist.

Die Abtriebswelle 2 ist mit einer zylindrischen Lagerstelle 4 in dem Gehäuse 3 gelagert. Die Lagerstelle 4 hat eine verhältnismäßig große Ausdehnung in axialer Richtung, die durch den Abstand C zwischen den beiden Enden der Lagerstelle 4 definiert ist. Weiterhin hat die Lagerstelle 4 einen Mittelpunkt 9, der sich in der Mitte zwischen ihren beiden Enden auf der Mittelachse 16 befindet. Die an dem freien Ende 5 der Abtriebswelle 2 befestigte Motorkurbel 8 ist in Richtung der Mittelachse 16 gekröpft ausgebildet. Sie taucht mit ihrem zweiten Ende 11 in einen links neben dem Gehäuse 3 zwischen dem Gehäuse 3 und der Trageinrichtung 14 befindlichen Freiraum der Wischanlage, um dort beim Betrieb der Wischanlage eine reversierende Drehbewegung auszuführen. Der an dem zweiten Ende 11 der Motorkurbel 8 vorgesehene theoretische Kraftübertragungspunkt 13 bewegt sich dabei auf der Teilkreisbahn 25 (Figur 3) zwischen zwei Umkehrpositionen. In Figur 2 ist zu erkennen, dass der Kraftübertragungspunkt 13 in der gedachten Ebene 26, welche rechtwinklig zu der Abtriebswelle 2 und durch den Mittelpunkt der Lagerstelle 4 verläuft. Dieses ist die günstigste Position im Hinblick auf die Vermeidung von auf die Abtriebswelle 2 während des Betriebes der Wischanlage rückwirkender Kräfte bzw. Kippmomente. Der Kraftübertragungspunkt 13 ist damit natürlich auch innerhalb der Abstände A oder B oder C positioniert, deren Definition aus Figur 5 ersichtlich ist und die unterschiedlichen Weiterbildungen der Erfindung entsprechen.

Bei dem Ausführungsbeispiel gemäß Figur 2 ist weiterhin zu erkennen, dass auch die Trageinrichtung 14 bzw. deren senkrecht zur Abtriebswelle 2 und durch die Längs-Mittellinie der Trageeinrichtung 14 verlaufende Ebene mit der Ebene 26 zusammenfällt, um die genannten Vorteile zu erzielen bzw. maximal zu gestalten. Ebenso sind in diesem Ausführungsbeispiel der den voneinander beabstandeten beiden Lagerstellen 28 der Wischerwelle 18 zuzuordnende Mittelpunkt 29 und der theoretische Kraftübertragungspunkt 24 des an der mit der Wischerwelle 18 verbundenen Schwinge 20 vorhandenen Übertragungselements 22 in dieser vermeintlich kräfteneutralen Ebene 26 positioniert. Letztendlich ist auch die Getriebestange 23 bzw. deren Kraftwirkungslinie in dieser Ebene 26 angeordnet. Auch in diesem Zusammenhang bedeutet das, dass alle zuvor genannten Teile bzw. Stellen der Wischanlage damit auch innerhalb der in Figur 5 definierten Abstände A oder B oder C positioniert sind.

Bei der Gestaltung gemäß Figur 3 könnten die Form der Motorkurbel 8 und/oder die Form des Gehäuses 3 und der Trageinrichtung 14 so aufeinander abgestimmt sein, dass Abschnitte des Gehäuses 3 bzw. der Trageinrichtung 14 direkt als Anschläge zur Begrenzung der Schwenkbewegung der Motorkurbel 8 genutzt werden. Alternativ könnten an den betreffenden Stellen des Gehäuses 3 bzw. der Trageinrichtung 14 spezielle Anschlagmittel ausgebildet oder angebracht sein.

In der Ausführung gemäß Figur 4 ist ersichtlich, dass der Schwenkbereich der Motorkurbel 8 im Vergleich mit der Ausführung gemäß Figur 3 an einer anderen Stelle vorgesehen ist. Der theoretische Kraftübertragungspunkt 13 des zu der Motorkurbel 8 gehörenden Übertragungselementes 12 wird hier beim Betrieb der Wischanlage auf der Teilkreisbahn 30 zwischen zwei definierten Umkehrpositionen bewegt. Die Teilkreisbahn 30 verläuft von dem ersten Ende 10 der Motorkurbel aus betrachtet jenseits der Trageinrichtung 14. Es ist anzumerken, dass je nach konkreter geometrischer Gestalt der Wischanlage eine entsprechende Teilkreisbahn auch an andere Stellen bzw. in andere Freiräume der Wischanlage gelegt werden kann.

Es wird noch ausdrücklich darauf hingewiesen, dass die in der Zeichnung dargestellten Übertragungselemente 12, 22 selbstverständlich bedarfsweise auch so an der jeweils gegenüberlienden Seite der Motorkurbel 8 oder der Schwinge 20 angebracht sein können und damit genau in die entgegengesetzte Richtung von der Motorkurbel 8 bzw. von der Schwinge 20 abragen. Dies könnte dazu führen, das die Motorkurbel 8 oder auch die Schwinge 20 gar nicht oder weniger stark gekröpft ausgebildet ist.

Weiterhin wird besonders darauf hingewiesen, dass abweichend von den Darstellungen auch eine Wischanlage mit sogenannten losen Wischlagern von der Erfindung betroffen ist. Eine solche Wischanlage besitzt keine Tragstruktur, über welche der Wischermotor und das mindestens eine Wischlager auch bereits vor dem Anbau der Wischanlage am Fahrzeug aneinander befestigt Vielmehr werden die Wischlager bzw. das mindestens eine Wischlager und der Wischermotor jeweils separat am Fahrzeugkörper befestigt, so dass dem Fahrzeugkörper die Funktion der Tragstruktur zukommt.

Derartige, in den beiden Absätzen zuvor angeführte Ausgestaltungen würden trotzdem die Erfindung realisieren.

Zusammenfassend wird nochmals festgestellt, dass einerseits die Ausgestaltungen der Erfindung dazu führt, dass die gesamte Wischanlage eine wesentlich geringere Bauhöhe als eine Wischanlage des vergleichbaren Standes der Technik aufweist. Aufgrund dessen ist die Wischanlage mit wesentlich geringerem Platzbedarf, als es bei dem vergleichbaren Stand der Technik der Fall ist, einzubauen.

Andererseits bewirken diese erfindungsgemäßen Ausgestaltungen, dass bei der Erfindung beim Betrieb der Wischanlage wesentlich geringere Kräfte auf die Abtriebswelle zurückwirken, als es bei vergleichbarem Stand der Technik der Fall ist. Dies geht mit einer wesentlich geringeren Belastung des Motors 4 und gegebenenfalls des mindestens einen Wischlagers 15 einher, wodurch die Lebensdauer des Motors 4 verlängert und die Geräuschentwicklung verringert werden.

### Bezugszeichen

- 1 -: Motor
- 2 -: Abtriebswelle
- 3 -: Gehäuse
- 4 -: Lagerstelle
- 5 -: freies Ende (der Abtriebswelle)
- 6 -: getriebeinneres Ende (der Abtriebswelle)
- 7 -: Getrieberad
- 8 -: Motorkurbel
- 9 -: Mittelpunkt (der Lagerstelle 4)
- 10 -: erstes Ende (der Motorkurbel)
- 11 -: zweites Ende (der Motorkurbel)
- 12 -: Übertragungselement (der Motorkurbel)
- 13 -: theoretischer Kraftübertragungspunkt
- 14 -: Trageinrichtung
- 15 -: Wischlager
- 16 -: Mittelachse (der Abtriebswelle)
- 17 -: Mittelachse (der Wischerwelle)
- 18 -: Wischerwelle
- 20 -: Schwinge
- 22 -: Übertragungselement (der Schwinge)
- 23 -: Getriebestange
- 24 -: theoretischer Kraftübertragungspunkt
- 25 -: Teilkreisbahn
- 26 -: Ebene
- 28 -: Lagerstelle (der Wischerwelle)
- 29 -: Mittelpunkt (der Lagerstellen 28)
- 30 -: Teilkreisbahn

- A -: Abstand
- B -: Abstand
- C -: Abstand

## Patentansprüche

1. Wischanlage für Scheiben an Fahrzeugen mit einem als Getriebemotor ausgebildeten elektrischen Motor (1), wobei der Motor (1) eine drehbar in einem Gehäuse (3) gelagerte Abtriebswelle (2) mit einem freien Ende (5) und einem getriebeinneren Ende (6) aufweist, mit einer Motorkurbel (8), die ein an dem freien Ende (5) der Abtriebswelle (2) befestigtes erstes Ende (10) und ein zweites Ende (11) mit einem Übertragungselement (12) aufweist, an dem ein Ende einer Getriebestange (23) angelenkt ist, deren anderes Ende an einer Schwinge (20) angelenkt ist, die wiederum drehfest an einer drehbar in einem Wischlager angeordneten Wischerwelle (18) befestigt ist, wobei die Motorkurbel (8) derart ausgebildet ist, dass der theoretische Kraftübertragungspunkt (13) des Übertragungselements (12) der Motorkurbel (8) in Richtung einer Mittelachse (16) der Abtriebswelle (2) in dem Abstand (A) zwischen dem freien Ende (5) und dem getriebeinneren Ende (6) der Abtriebswelle (2) positioniert ist, wobei die Abtriebswelle (2) in einer zylindrischen Lagerstelle (4) oder in zwei axial voneinander beabstandeten Lagerstellen gelagert ist und der theoretische Kraftübertragungspunkt (13) des Übertragungselements (12) in Richtung der Mittelachse (16) der Abtriebswelle (2) in dem Abstand (B) zwischen dem freien Ende (5) der Abtriebswelle (2) und dem am weitesten entfernt von dem freien Ende (5) der Abtriebswelle (2) befindlichen Ende der einen zylindrischen Lagerstelle (4) bzw. der zwei Lagerstellen positioniert ist, **dadurch gekennzeichnet, dass** der theoretische Kraftübertragungspunkt (13) des Übertragungselements (12) in Richtung der Mittelachse (16) der Abtriebswelle (2) in dem Abstand (C) zwischen den beiden Enden der einen zylindrischen Lagerstelle (4) bzw. zwischen den am weitesten voneinander entfernt befindlichen Enden der beiden Lagerstellen der Abtriebswelle (2) positioniert ist.

2. Wischanlage nach Anspruch 1 **dadurch gekennzeichnet, dass** der theoretische Kraftübertragungspunkt (13) des Übertragungselements (12) in Richtung der Mittelachse (16) der Abtriebswelle (2) im wesentlichen auf Höhe des Mittelpunktes (9) der einen zylindrischen Lagerstelle (4) bzw. des Mittelpunktes zwischen den zwei voneinander beabstandeten Lagerstellen der Abtriebswelle (2) positioniert ist.

3. Wischanlage nach einem der vorhergehenden Ansprüche, wobei der Motor (1) an einer Trageeinrichtung (14) befestigt ist, **dadurch gekennzeichnet, dass** die Trageinrichtung (14) bzw. die rechtwinklig zu der Abtriebswelle (2) und durch die Längs-Mittellinie der Trageinrichtung (14) verlaufende gedachte Ebene in Richtung der Mittelachse (16) der Abtriebswelle (2) in dem Abstand (A) zwischen dem freien Ende (5) und dem getriebeinneren Ende (6) der Abtriebswelle (2) positioniert ist.

4. Wischanlage nach Anspruch 3, **dadurch gekennzeichnet, dass** die Trageinrichtung (14) bzw. die rechtwinklig zu der Abtriebswelle (2) und durch die Längs-Mittellinie der Trageinrichtung (14) verlaufende gedachte Ebene in Richtung der Mittelachse (16) der Abtriebswelle (2) in dem Abstand (C) zwischen den beiden Enden der einen zylindrischen Lagerstelle (4) bzw. zwischen den am weitesten voneinander entfernt befindlichen Enden der beiden Lagerstellen der Abtriebswelle (2) positioniert ist.

5. Wischanlage nach einem der vorhergehenden Ansprüche, **dadurch gekennzeichnet, dass** die mindestens eine an der Motorkurbel (8) und an der Schwinge (20) der Wischerwelle (18) angelenkte Getriebestange (23) bzw. deren Wirkungslinie in Richtung der Mittelachse (16) der Abtriebswelle (2) in dem Abstand (A) zwischen dem freien Ende (5) und dem getriebeinneren Ende (6) der Abtriebswelle (2) positioniert ist.

6. Wischanlage nach Anspruch 5, **dadurch gekennzeichnet, dass** die mindestens eine an der Motorkurbel (8) und an der Schwinge (20) der Wischerwelle (18) angelenkte Getriebestange (23) bzw. deren Wirkungslinie in Richtung der Mittelachse (16) der Abtriebswelle (2) in dem Abstand (C) zwischen den beiden Enden der einen Lagerstelle (4) bzw. zwischen den am weitesten voneinander entfernt befindlichen Enden der beiden Lagerstellen der Abtriebswelle (2), vorzugsweise aber im wesentlichen auf Höhe des Mittelpunktes (9) davon, positioniert ist.

7. Wischanlage nach einem der vorhergehenden Ansprüche, bei der die Wischerwelle (18) des mindestens einen Wischlagers (15) in einer einzigen zylindrischen Lagerstelle oder in zwei axial voneinander beabstandeten Lagerstellen (28) gelagert ist, **dadurch gekennzeichnet, dass** der von der einen Lagerstelle oder von den zwei Lagerstellen (28) gebildete Lagermittelpunkt (29) in Richtung einer Mittelachse (16) der Abtriebswelle (2) betrachtet in dem Abstand (A) zwischen dem freien Ende (5) und dem getriebeinneren Ende (6) der Abtriebswelle (2) positioniert ist.

8. Wischanlage nach Anspruch 7, **dadurch gekennzeichnet, dass** der von der einen Lagerstelle oder von den zwei Lagerstellen (28) des mindestens einen Wischlagers (15) gebildete Lagermittelpunkt (29) in Richtung einer Mittelachse (16) der Abtriebswelle (2) betrachtet in dem Abstand (C) zwischen den beiden Enden der einen Lagerstelle (4) bzw. in dem Abstand zwischen den am weitesten voneinander entfernt befindlichen Enden der beiden Lagerstellen der Abtriebswelle (2), vorzugsweise aber im wesentlichen auf Höhe des Mittelpunktes (9) davon, positioniert ist.

9. Wischanlage nach einem der vorhergehenden Ansprüche, bei der die mit der Wischerwelle (18) verbundene Schwinge (20) über ein Übertragungselement (22) mit der zugehörigen Getriebestange (23) verbunden ist, **dadurch gekennzeichnet, dass** die Schwinge (20) derartig ausgebildet oder angeordnet ist, dass der theoretische Kraftübertragungspunkt (24) des Übertragungselementes (22) in Richtung einer Mittelachse (16) der Abtriebswelle (2) betrachtet in dem Abstand (A) zwischen dem freien Ende (5) und dem getriebeinneren Ende (6) der Abtriebswelle (2) positioniert ist.

10. Wischanlage nach Anspruch 9, **dadurch gekennzeichnet, dass** der theoretische Kraftübertragungspunkt (24) des an der Schwinge (20) vorgesehenen Übertragungselementes (22) in Richtung einer Mittelachse (17) der Wischerwelle (18) betrachtet in dem Abstand zwischen den beiden Enden der einen zylindrischen Lagerstelle bzw. in dem Abstand zwischen den am weitesten voneinander entfernt befindlichen Enden der beiden Lagerstellen (28) der Wischerwelle (18), vorzugsweise aber im wesentlichen auf Höhe des Mittelpunktes (29) davon, positioniert ist.

11. Wischanlage nach einem der vorhergehenden Ansprüche, **dadurch gekennzeichnet, dass** die beiden Enden (10, 11) der Motorkurbel (8) in Richtung der Mittelachse (16) der Abtriebswelle (2) versetzt angeordnet sind.

12. Wischanlage nach einem der vorhergehenden Ansprüche, **dadurch gekennzeichnet, dass** im gesamten Umlaufbereich der Motorkurbel (8) in Richtung der Mittelachse (16) der Abtriebswelle (2) zwischen der Motorkurbel (8) und deren benachbarten Teilen der Wischanlage ein Abstand besteht, so dass die Motorkurbel (8) vollständig, d. h. 360° umlaufen kann.

13. Wischanlage nach einem der Ansprüche 1-11, **dadurch gekennzeichnet, dass** die Motorkurbel (8) in einen an der Wischanlage vorhandenen Freiraum eintaucht, so dass das zweite Ende (11) der Motorkurbel (8) mit dem Übertragungselement (12) bzw. mit dem theoretischen Kraftübertragungspunkt (13) des Übertragungselementes (12) eine pendelnde Bewegung zwischen zwei Umkehrpositionen auf einer Teilkreisbahn ausführen kann.

14. Wischanlage nach Anspruch 13, **dadurch gekennzeichnet, dass** den Umkehrpositionen der Motorkurbel (8) benachbarte Teile bzw. Abschnitte der Wischanlage als Anschläge für die Begrenzung der Pendelbewegung der Motorkurbel (8) ausgebildet bzw. mit Anschlagmitteln versehen sind.

## Claims

1. Wiper module for vehicle windscreens with an electric motor (1), designed as a geared motor, with the motor (1) having a rotating output shaft (2) mounted in a housing (3) with a free end (5) and an end in side the gear (6), with a motor crank (8), which has a first end (10) fixed to the free end (5) of the output shaft (2) and a second end (11) with a transmission element (12), to which one end of a gear rod (23) is hinged, the other end of which is hinged to a motion link (20), which is in turn fixed in a torque-proof fashion to a wiper shaft (18) arranged rotatably in a pivot assembly, with the motor crank (8) being designed in such a way that the theoretical power transmission point (13) of the transmission element (12) of the motor crank (8) in the direction of a central axis (16) of the output shaft (2) is located in the distance (A) between the free end (5) and the end inside the gear (6) of the output shaft (2), with the output shaft (2) being mounted in a cylindrical bearing (4) or in two bearings positioned axially apart from one another and the theoretical power transmission point (13) of the transmission element (12) in the direction of the central axis (16) of the output shaft (2) being located in the distance (B) between the free end (5) of the output shaft (2) and the end of a cylindrical bearing (4) or the two bearings most distant from the free end (5) of the output shaft (2), **characterised in that** the theoretical power transmission point (13) of the transmission element (12) in the direction of the central axis (16) of the output shaft (2) is located in the distance (C) between the two ends of the one cylindrical bearing (4) or between the ends most distant from one another of both bearings of the output shaft (2).

2. Wiper module according to claim 1, **characterised in that** the theoretical power transmission point (13) of the transmission element (12) in the direction of the central axis (16) of the output shaft (2) is essentially located at the level of the centre point (9) of the one cylindrical bearing (4) or the centre point between the two bearings of the output shaft (2) located at a distance from one another.

3. Wiper module according to one of the above claims, with the motor (1) being fixed to a carrier device (14), **characterised in that** the carrier device (14) and the imaginary plane running at a right angle to the output shaft (2) and through the longitudinal central line of the carrier device (14) in the direction of the central axis (16) of the output shaft (2) is located in the distance (A) between the free end (5) and the end inside the gear (6) of the output shaft.

4. Wiper module according to claim 3, **characterised in that** the carrier device (14) and the imaginary plane running at a right angle to the output shaft (2) and through the longitudinal central line of the carrier device (14) in the direction of the central axis (16) of the output shaft (2) is located in the distance (C) between the two ends of the one cylindrical bearing (4) or between the ends most distant from one another of the two bearings of the output shaft (2).

5. Wiper module according to one of the above claims, **characterised in that** the at least one gear rod (23) hinged to the motor crank (8) and to the motion link (20) of the wiper shaft (18) and its force line in the direction of the centre axis (16) of the output shaft (2) is located in the distance (A) between the free end (5) and the end inside the gear (6) of the output shaft (2).

6. Wiper module according to claim 5, **characterised in that** the at least one gear rod (23) hinged to the motor crank (8) and to the motion link (20) of the wiper shaft (18) and its force line in the direction of the centre axis (16) of the output shaft (2) is located in the distance (C) between the two ends of the one bearing (4) or between the ends of the two bearings of the output shaft (2) most distant from one another, preferably however essentially at the level of the centre point (9) thereof.

7. Wiper module according to one of the above claims, in which the wiper shaft (18) of the at least one pivot assembly (15) is mounted in a single cylindrical bearing or in two bearings (28) axially apart from one another, **characterised in that** the bearing centre point (29) formed by the one bearing or the two bearings (28) considered in the direction of a central axis (16) of the output shaft (2) is located in the distance (A) between the free end (5) and the end inside the gear (6) of the output shaft (2).

8. Wiper module according to claim 7, **characterised in that** the bearing centre point (29) formed by the one bearing or by the two bearings (28) of the at least one pivot assembly (15) considered in the direction of a centre axis (16) of the output shaft (2) is located in the distance (C) between the two ends of the one bearing (4) or in the distance between the ends of the two bearings of the output shaft (2) most distant from one another, preferably however essentially at the level of the centre point (9) thereof.

9. Wiper module according to one of the above claims, in which the motion link (20) connected to the wiper shaft (18) is connected via a transmission element (22) to the respective gear rod (23) **characterised in that** the motion link (20) is designed or arranged in such a way that the theoretical power transmission point (24) of the transmission element (22) considered in the direction of a central axis (16) of the output shaft (2) is located in the distance (A) between the free end (5) and the end inside the gear (6) of the output shaft (2).

10. Wiper module according to claim 9, **characterised in that** that theoretical power transmission point (24) of the transmission element provided on the motion link (20) considered in the direction of a central axis (17) of the wiper shaft (18) is located in the distance between the two ends of the one cylindrical bearing or in the distance between the ends of the two bearings (28) of the wiper shaft (18) most distant from one another, preferably however essentially at the level of the centre point (29) thereof.

11. Wiper module according to one of the above claims; **characterised in that** the two ends (10, 11) of the motor crank (8) have an offset arrangement in the direction of the centre axis (16) of the output shaft (2).

12. Wiper module according to one of the above claims, **characterised in that** that in the entire rotation range of the motor crank (8) in the direction of the centre axis (16) of the output shaft (2) between the motor crank (8) and its adjacent components of the wiper module, a distance exists, so that the motor crank (8) can revolve completely, i.e. through 360°.

13. Wiper module according to one of claims 1-11, **characterised in that** the motor crank (8) projects into a space existing in the wiper module, so that the second end (11) of the motor crank (8) with the transmission element (12) and with the theoretical power transmission point (13) of the transmission element (12) can execute an oscillating movement between two reverse positions along a pitch circle path.

14. Wiper module according to claim 13, **characterised in that** the components and sections of the wiper module adjacent to the reverse positions of the motor crank (8) are designed as stops to limit the oscillating movement of the motor crank (8) or are equipped with stop devices.

## Revendications

1. Système d'essuie-glace destiné à des vitres de véhicules avec un moteur électrique (1) configuré sous la forme d'un motoréducteur, moyennant quoi le moteur (1) présente un arbre de roue (2) logé de manière rotative dans un boîtier (3) avec une extrémité libre (5) et une extrémité interne à l'engrenage (6), une manivelle de moteur (8), qui présente une première extrémité (10) fixée sur l'extrémité libre (5) de l'arbre de roue (2) et une deuxième extrémité (11) avec un élément de transmission (12) sur lequel est articulée une extrémité d'une barre d'engrenage (23), dont l'autre extrémité est articulée sur une bielle oscillante (20), qui est de nouveau fixée de manière résistante à la rotation sur un arbre d'essuie-glace disposé de manière rotative dans un palier d'essuie-glace, moyennant quoi la manivelle du moteur (8) est configurée de telle sorte que le point de transmission de forces théorique (13) de l'élément de transmission (12) de la manivelle du moteur (8) est positionné en direction d'un axe médian (16) de l'arbre de roue (2) à une certaine distance (A) entre l'extrémité libre (5) et l'extrémité interne à l'engrenage (6) de l'arbre de roue (2), moyennant quoi l'arbre de roue (2) est disposé à un emplacement de palier cylindrique (4) ou à deux emplacements de palier éloignés axialement l'un de l'autre, et le point de transmission de forces théorique (13) de l'élément de transmission (12) est positionné en direction de l'axe médian (16) de l'arbre de roue (2) à une certaine distance (B) entre l'extrémité libre (5) de l'arbre de roue (2) et l'extrémité la plus éloignée de l'extrémité libre (5) de l'arbre de roue (2) du un emplacement de palier cylindrique (4) ou des deux emplacements de palier, **caractérisé en ce que** le point de transmission de forces théorique (13) de l'élément de transmission (12) est positionné en direction de l'axe médian (16) de l'arbre de roue (2) à une certaine distance (C) entre les deux extrémités du un emplacement de palier cylindrique (4) ou entre les extrémités les plus éloignées l'une de l'autre des deux emplacements de palier de l'arbre de roue (2).

2. Système d'essuie-glace selon la revendication 1, **caractérisé en ce que** le point de transmission de forces théorique (13) de l'élément de transmission (12) est positionné en direction de l'axe médian (16) de l'arbre de roue (2) sensiblement à hauteur du point médian (9) du un emplacement de palier cylindrique (4) ou du point médian entre les deux emplacements de palier éloignés l'un de l'autre de l'arbre de roue (2).

3. Système d'essuie-glace selon l'une quelconque des revendications précédentes, dans lequel le moteur (1) est fixé sur un dispositif de support (14), **caractérisé en ce que** le dispositif de support (14) ou le plan fictif s'étendant perpendiculairement à l'arbre de roue (2) et passant par la ligne médiane longitudinale du dispositif de support (14) est positionné en direction de l'axe médian (16) de l'arbre de roue (2) à une certaine distance (A) entre l'extrémité libre (5) et l'extrémité interne à l'engrenage (6) de l'arbre de roue (2).

4. Système d'essuie-glace selon la revendication 3, **caractérisé en ce que** le dispositif de support (14) ou le plan fictif s'étendant perpendiculairement à l'arbre de roue (2) et passant par la ligne médiane longitudinale du dispositif de support (14) est positionné en direction de l'axe médian (16) de l'arbre de roue (2) à une certaine distance (C) entre les deux extrémités du un emplacement de palier cylindrique (4) ou entre les deux extrémités les plus éloignées l'une de l'autre des deux emplacements de palier de l'arbre de roue (2).

5. Système d'essuie-glace selon l'une quelconque des revendications précédentes, **caractérisé en ce que** la au moins une barre d'engrenage (23) articulée sur la manivelle du moteur (8) et sur la bielle oscillante (20) de l'arbre d'essuie-glace (18) ou sa ligne d'action est positionnée en direction de l'axe médian (16) de l'arbre de roue (2) à une certaine distance (A) entre l'extrémité libre (5) et l'extrémité interne à l'engrenage (6) de l'arbre de roue (2).

6. Système d'essuie-glace selon la revendication 5, **caractérisé en ce que** la au moins une barre d'engrenage (23) articulée sur la manivelle du moteur (8) et sur la bielle oscillante (20) de l'arbre d'essuie-glace (18) ou sa ligne d'action est positionnée en direction de l'axe médian (16) de l'arbre de roue (2) à une certaine distance (C) entre les deux extrémités du un emplacement de palier (4) ou entre les deux extrémités les plus éloignées l'une de l'autre des deux emplacements de palier de l'arbre de roue (2), mais de préférence sensiblement à hauteur du point médian (9) de celui-ci.

7. Système d'essuie-glace selon l'une quelconque des revendications précédentes, dans lequel l'arbre d'essuie-glace (18) du au moins palier d'essuie-glace (15) est disposé à un emplacement de palier cylindrique unique ou à deux emplacements de palier (28) éloignés axialement l'un de l'autre, **caractérisé en ce que** le point médian de palier (29) formé par le un emplacement de palier ou par les deux emplacements de palier (28) est positionné en direction d'un axe médian (16) de l'arbre de roue (2) considéré à une certaine distance (A) entre l'extrémité libre (5) et l'extrémité interne à l'engrenage (6) de l'arbre de roue (2).

8. Système d'essuie-glace selon la revendication 7, **caractérisé en ce que** le point médian de palier (29) formé par le un emplacement de palier ou par les deux emplacements de palier (28) du au moins un palier d'essuie-glace (15) est positionné en direction d'un axe médian (16) de l'arbre de roue (2) considéré à une certaine distance (C) entre les extrémités libres du un emplacement de palier (4) ou à une certaine distance entre les extrémités les plus éloignées l'une de l'autre des deux emplacements de palier de l'arbre de roue (2), mais de préférence sensiblement à hauteur du point médian (9) de ceux-ci.

9. Système d'essuie-glace selon l'une quelconque des revendications précédentes, dans lequel la bielle oscillante (20) reliée à l'arbre d'essuie-glace (18) est reliée par l'intermédiaire d'un élément de transmission (22) à la barre d'engrenage (23) associée, **caractérisé en ce que** la bielle oscillante (20) est configurée ou disposée de telle sorte que le point de transmission de forces théorique (24) de l'élément de transmission (22) est positionné en direction d'un axe médian (16) de l'arbre de roue (2) considéré à une certaine distance (A) entre l'extrémité libre (5) et l'extrémité interne à l'engrenage (6) de l'arbre de roue (2).

10. Système d'essuie-glace selon la revendication 9, **caractérisé en ce que** le point de transmission de forces théorique (24) de l'élément de transmission (22) prévu sur la bielle oscillante (20) est positionné en direction d'un axe médian (17) de l'arbre d'essuie-glace (18) considéré à une certaine distance entre les deux extrémités du un emplacement de palier cylindrique ou à une certaine distance entre les extrémités les plus éloignées l'une de l'autre des deux emplacements de palier (28) de l'arbre d'essuie-glace (18), mais de préférence sensiblement à hauteur du point médian (29) de ceux-ci.

11. Système d'essuie-glace selon l'une quelconque des revendications précédentes, **caractérisé en ce que** les deux extrémités (10, 11) de la manivelle du moteur (8) sont disposées en étant décalées en direction de l'axe médian (16) de l'arbre de roue (2).

12. Système d'essuie-glace selon l'une quelconque des revendications précédentes, **caractérisé en ce que**, sur toute la zone périphérique de la manivelle du moteur (8), en direction de l'axe médian (16) de l'arbre de roue (2), entre la manivelle du moteur (8) et les éléments voisins du système d'essuie-glace, il existe une distance telle que la manivelle du moteur (8) peut décrire un cercle complet, à savoir 360°.

13. Système d'essuie-glace selon l'une quelconque des revendications 1 à 11, **caractérisé en ce que** la manivelle du moteur (8) pénètre dans un espace libre existant sur le système d'essuie-glace, de telle sorte que la deuxième extrémité (11) de la manivelle du moteur (8) peut effectuer avec l'élément de transmission (12) ou avec le point de transmission de forces théorique (13) de l'élément de transmission (12) un déplacement de va-et-vient entre deux positions inverses sur une trajectoire circulaire partielle.

14. Système d'essuie-glace selon la revendication 13, **caractérisé en ce que** les sections ou éléments voisins des positions inverses de la manivelle du moteur (8) du système d'essuie-glace sont configurés sous la forme de butées pour limiter le déplacement de va-et-vient de la manivelle du moteur (8) ou sont dotés des moyens de butée.
